# EUROPEAN PATENT APPLICATION

(11) **EP 4 804 399 A1**
(43) Date of publication of application: **09.09.2026**
(21) Application number: 25162123.1
(22) Date of filing: 06.03.2025
(51) Int. Cl.: H02P 23/14

(54) **DETERMINING AN INERTIA CONSTANT OF A SYNCHRONOUS MACHINE**

(71) Applicant: ABB SCHWEIZ AG, 5400 Baden (CH)
(72) Inventor: KNAZKINS, Valerijs, 5443 Niederrohrdorf (CH); CAVALLINI, Giacomo, 5436 Würenlos, Aargau (CH); WIESER, Rudolf, 5452 Oberrohrdorf, Aargau (CH); CORREAL, Kyle Andres, 5412 Gebenstorf (CH)
(74) Representative: Zimmermann & Partner Patentanwälte mbB

(57) **Abstract**

A method for determining at least one parameter of a synchronous machine (100) including a rotor (120) and a stator (110), the parameter including at least an inertia constant of the synchronous machine, comprises driving (S1001) the rotor at a substantially constant driving torque; adding (S1002) a disturbance signal causing an oscillation in an active electrical power (Pₑ) output by the synchronous machine and a variation in an electrical angular speed of the rotor; for each phase, measuring (S1003) a stator voltage and a stator current of the stator of the synchronous machine; for each phase, determining (S1004) an internal electromotive force, EMF, using the stator voltages and the stator currents; determining (S1005) the electrical angular speed of the rotor using the EMFs; determining (S1006) the active electrical power (Pₑ) of the synchronous machine using the stator voltages and the stator currents; and determining (S1007) the inertia constant from the determined active electrical power (Pₑ) and the determined electrical angular speed.

A parameter estimator (200) may be used to implement the method.

## Description

### TECHNICAL FIELD

Embodiments of the technology disclosed in the present specification generally relate to determining a parameter of a synchronous machine, including the inertia constant of the synchronous machine.

### BACKGROUND

A synchronous machine generally includes a stator and a rotor arranged circumferentially around a common axis. In power systems, one or more synchronous machines are each operated as a generator (hereinafter, also referred to as a synchronous generator), or a motor. A synchronous generator is driven mechanically on the rotor side and induces electrical power that is e.g. fed to a power grid.

In some applications, e.g. for designing or tuning a power system stabilizer, the inertia constant of the synchronous machine must be known or at least be approximated. Conventionally, the inertial constant is often determined using e.g. a so-called partial load rejection test or by using a system identification approach. System identification is in many cases not possible since it requires precise rotor speed measurements, which in many cases are unavailable. Load rejection tests require special arrangements and are accompanied by interruption of the normal operation of the generator, which is undesirable.

There is a demand for a reliable and easy determination of the inertia constant.

### SUMMARY OF THE INVENTION

A method for estimating at least one parameter of a synchronous machine including a rotor and a stator is provided. The parameter includes at least an inertia constant of the synchronous machine. The method comprises:
- driving the rotor at a substantially constant driving torque;
- adding a disturbance signal causing a variation in an active electrical power (Pₑ) output by the synchronous generator and a variation in an electrical angular speed of the rotor;
- for each phase, measuring a stator voltage and a stator current of the stator of the synchronous machine;
- for each phase, determining an internal electromotive force, EMF, using the stator voltages and the stator currents;
- determining the electrical angular speed of the rotor using the EMFs;
- determining the active electrical power (Pₑ) of the synchronous machine using the stator voltages and the stator currents;
- determining the inertia constant from the determined active electrical power (Pₑ) and the determined electrical angular speed.

Furthermore, a parameter estimator for a synchronous machine including a stator and a rotor is provided. The parameter estimator is configured to estimate, at least, an inertia constant of the synchronous machine, by performing a method as disclosed herein.

According to yet a further aspect, a non-volatile storage medium is provided. The storage medium has a computer program stored thereon. The computer program includes instructions that, when they are executed on a computer processor, cause the processor to perform a method as described herein.

### SHORT DESCRIPTION OF THE DRAWINGS

Fig. 1 shows a block diagram of a synchronous machine in an embodiment.
Fig. 2 shows a flow chart of an exemplary method according to an embodiment.

### DETAILED DESCRIPTION

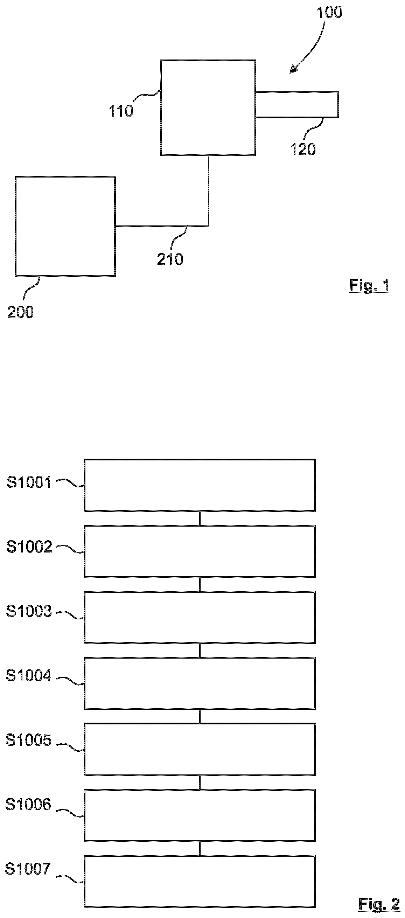

Fig. 1 shows a block diagram of a synchronous machine 100 having a stator 110 and a rotor 120. A parameter estimator 200 is connected, via a signal line 210, to the machine 100.

Embodiments disclosed in the present specification may help to determine, i.e. calculate, approximate or estimate, the inertia constant of the synchronous machine 100, e.g. using the parameter estimator. In an exemplary embodiment, the synchronous machine 100 is configured as a synchronous generator. Usually, a synchronous generator system includes a power system stabilizer (PSS, not shown). The PSS serves the purpose of damping variations or oscillations in the rotor-displacement angle, and is a part of the control loop of the synchronous generator. Tuning of the PSS usually requires the inertia constant to be known. In addition, the inertia constant is beneficial for optimizing time constants of phase correcting filters used in deriving the angular speed of the rotor from electrical measurements (e.g., voltages, currents) which are readily available.

A synchronous machine 100 operated as a generator (hereinafter, also referred to as a synchronous generator) includes the stator 110 and the rotor 120 arranged circumferentially around a common axis, as mentioned above. As used herein, the axis may be referred to as the rotor axis. During the operation of the synchronous machine, the relative position of the rotor axis vs. the magnetic field is referred to as the rotor angle, or torque angle. At ideal operation conditions, the relation of the rotor angle to the magnetic field is fixed. Upon a disturbance, the rotor angle changes with respect to time (i.e., a rotor swing occurs). The so-called swing equation relates the acceleration or deceleration of the rotor to the mechanical input power and the electrical output power of the synchronous generator. The swing equation is a second-order differential equation representing the motion dynamics of the rotor in the synchronous generator.

The swing equation may e.g. be derived from the rotor motion equation of the synchronous generator: $J \frac{{d}^{2} δ}{{dt}^{2}} = {T}_{a} = {T}_{m} - {T}_{e}$ where *J* is the total moment of inertia, δ is the angular position of the rotor, t is time, Tₘ is the mechanical torque supplied to the synchronous generator, Tₑ is the electrical torque output of the alternator, and Tₐ is the net acceleration torque.

The angular velocity (angular speed) ωₘ of the rotor is given as ${ω}_{m} = \frac{{dδ}_{m}}{dt}$. Multiplying both sides with ωₘ yields ${Jω}_{m} \frac{{d}^{2} δ}{{dt}^{2}} = {P}_{a} = {P}_{m} - {P}_{e}$ $\frac{{Jω}_{m}}{2 {S}_{n}} \frac{{d}^{2} δ}{{dt}^{2}} = \frac{{P}_{a}}{{S}_{n}} = \frac{{P}_{m}}{{S}_{n}} - \frac{{P}_{e}}{{S}_{n}}$ where $\frac{{Jω}_{m}}{2 {S}_{n}} = H$ is the inertia constant of the machine, Sₙ is the apparent power, Pₐ is the accelerating power, Pₑ is the electrical power, and Pₘ is the mechanical power.

According to some embodiments, at least the inertial constant as a parameter of the synchronous machine is determined, e.g. estimated, without performing a load rejection test.

The above-mentioned swing equation governs the rotor dynamics of the synchronous machine. Determining some of the parameters of the swing equation directly is not possible in many cases. According to some embodiments, the ideal rotor speed in the swing equation is replaced with a phase-compensated angular speed. The phase-compensated angular speed may be obtained by determining, e.g. reconstructing, the internal electromotive forces, EMFs, of the phases (e.g. three phases in a typical three-phase system) using the stator voltages and the stator currents.

The stator voltages and stator currents are typically readily available. For example, a time series of the stator voltages and the stator currents is recorded, i.e. sampled over time during a limited recoding time period. During the recording time period, the synchronous generator is driven at a substantially constant torque. For example, the synchronous generator is operated in a quasi steady-state in which the mechanical driving torque on the generator shaft remains constant.

In some embodiments described herein, the PSS is deactivated during the recoding time period.

In order to evoke a state in which the swing equation reflects some rotor dynamics, a small disturbance signal is added, e.g. commanded by the parameter estimator 200, that causes a variation in the active electrical power Pₑ output by the synchronous generator and that causes a variation in an electrical angular speed of the rotor. The disturbance signal is, for example, an excitation signal. Adding the disturbance signal includes, for example, overlying the disturbance signal to a setpoint of an automatic voltage regulator of the synchronous machine, wherein the disturbance signal is limited to e.g. 0.5% or less of the setpoint voltage.

In an example, the EMF for one phase is determined as: ${E}_{p} = {U}_{g} + {jX}_{q} {I}_{g} ,$ wherein Eₚ indicates the internal EMF, U_{g} indicates a phasor of the stator voltage, I_{g} indicates a phasor of the stator current, and X_{q} indicates a q-axis synchronous reactance of the synchronous generator. Note that one or more of Eₚ, U_{g}, I_{g}, X_{q} may be approximated quantities.

A zero-crossing or a Kalman filter-based technique may be used to determine the phase-compensated angular speed from the EMFs for each phase. For example, the phase-compensated angular speed may be determined, or derived, from the EMF by employing the method as described in the European Patent Application Publication No. EP 2 881 744 A1, the entirety of which is incorporated herein by reference. For example, one or more electrical parameters of the synchronous machine are measured, and, using an Extended Kalman Filter algorithm, a rotational speed which is a representative of the angular speed, is determined, wherein the one or more electrical parameters are input into the Extended Kalman Filter algorithm as input parameters. In an example, the electrical parameters include a current at a terminal of the synchronous machine and/or a voltage at the terminal of the synchronous machine. The parameters may also include at least one of an inertia constant, a damping constant, an armature resistance, a steady state reactance, a steady state inductance, a transient reactance, a transient inductance, a subtransient reactance and a subtransient inductance.

In an example, the active electrical power Pₑ of the synchronous machine is determined using the stator voltages and the stator currents, e.g. as active power ${P}_{e} = Re \left({U}_{g}{I}_{g}^{∗}\right)$.

The phase-compensated angular speed is then used in the swing equation. In an example, determining the inertia constant includes solving an optimization problem, wherein the optimization problem is based on minimizing a difference between the determined electrical angular speed and a simulated angular speed. The simulated angular speed may be obtained based on the swing equation of the synchronous machine, wherein the swing equation is obtained by parametrizing on the inertia constant, a damping coefficient, and phase-compensation speed filter time constants.

A non-limiting example of the optimization problem is formulated as ${p}^{∗} = {argmin}_{p ∈ P} {\left‖{ω}_{Ep}-{\hat{ω}}_{Ep}\left(p\right)\right‖}_{2}^{2}$ *subject to:* $H > 0 , D > 0$ $p = \left[{T}_{f 1}, {T}_{f 2}, {T}_{f 3}, {T}_{f 4}, H, D\right]$ $\frac{Δ {f}_{Ep} \left(s\right)}{Δ {P}_{e} \left(s\right)} = \frac{{T}_{f 2} s + 1}{{T}_{f 1} s + 1} ⋅ \frac{{T}_{f 4} s + 1}{{T}_{f 3} s + 1} ⋅ \frac{- 1}{2 Hs + D}$

wherein H indicates the inertia constant, D indicates a damping coefficient, T_{f1}...T_{f4} indicate time constants, and ω_{Ep} and *ω̂_{Ep}* indicate the determined electrical angular speed and the simulated angular speed, respectively.

For example, the inertia constant H, the damping coefficient D, and the filter time constants T_{f1}...T_{f4} are estimated by solving the optimization problem, e.g. the optimization problem shown above.

In an exemplary estimation process, in a step (a), the active power Pₑ and the electrical rotor speed are computed using the 3-phase stator voltages and currents. Then, in a step (b), an initial set and upper and lower bounds of the parameters to be optimized are selected. Then, in a step (c), the optimization problem is solved. If the optimization was not successful, the process returns to step (b). If the optimization was successful, the optimized parameters are output.

As a non-limiting example, the lower bound may be set as H=0.01, D=0.001, T_{f1}=T_{f2}=T_{f3}=T_{f4}=0.01.

Fig. 2 shows a flow chart of an exemplary method according to an embodiment. The parameter estimator 200 of Fig. 1 may be configured to carry out the method. In S1001, the rotor 120 is driven at a substantially constant driving torque. In S1002, the disturbance signal, as elaborated above, is added, which causes an oscillation to occur in the active electrical power output by the synchronous machine 100, and a variation in the electrical angular speed of the rotor 110. In S1003, for each phase of the machine 100, a stator voltage and a stator current of the stator 110 are measured. In S1004, for each phase, the EMF is determined, using the stator voltages and the stator currents. In S1005, the electrical angular speed of the rotor 120 is determined, using the EMFs. In S1006, the active electrical power of the machine 100 is determined, using the stator voltages and the stator currents. In S1007, the inertia constant is determined from the determined active electrical power and the determined electrical angular speed.

In the preceding, reference is made to an embodiment or embodiments. However, the scope of the present disclosure is not limited to specific described embodiment. Instead, any combination of the described features and elements, related to different embodiments or not, is contemplated to implement and practice an embodiment. Furthermore, although an embodiment disclosed herein may achieve advantages over other possible solutions or over the prior art, whether or not a particular advantage is achieved by a given embodiment is not limiting of the scope of the present disclosure. Thus, the preceding aspects, features, embodiments and advantages are illustrative.

The embodiments disclosed herein may be embodied as a system, e.g. including the machine 100 and the estimator 200, as a method, e.g. as shown in Fig. 2, or as a computer program product. That is, aspects may take the form of a computer program product embodied in one or more computer readable mediums having computer readable program code embodied thereon which, when executed on a computer, perform the method as described herein.

Aspects of the present disclosure described herein with reference to the flowchart in Fig. 2 illustrations and/or the block diagram in Fig. 1 may be conceived as methods, systems and/or computer program products according to embodiments presented herein. It will be understood that each block of the flowchart illustrations and/or block diagrams, and combinations of blocks in the flowchart illustrations and/or block diagrams, can be implemented by computer program instructions.

The flowchart and block diagrams in the Figures illustrate the architecture, functionality, and operation of possible implementations of the technology described herein. Each block in the flowchart may represent a module, segment, or portion of instructions, which comprises one or more executable instructions for implementing function or functions. In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved.

## Claims

1. A method for determining at least one parameter of a synchronous machine (100) including a rotor (120) and a stator (100), the parameter including at least an inertia constant of the synchronous machine, the method comprising:
- driving (S1001) the rotor at a substantially constant driving torque;
- adding (S1002) a disturbance signal causing an oscillation in an active electrical power (Pₑ) output by the synchronous machine and a variation in an electrical angular speed of the rotor;
- for each phase, measuring (S1003) a stator voltage and a stator current of the stator of the synchronous machine;
- for each phase, determining (S1004) an internal electromotive force, EMF, using the stator voltages and the stator currents;
- determining (S1005) the electrical angular speed of the rotor using the EMFs;
- determining (S1006) the active electrical power (Pₑ) of the synchronous machine using the stator voltages and the stator currents;
- determining (S1007) the inertia constant from the determined active electrical power (Pₑ) and the determined electrical angular speed.

2. The method of claim 1, wherein adding the disturbance signal includes adding the disturbance signal to a setpoint of an automatic voltage regulator of the synchronous machine.

3. The method of claim 2, wherein the disturbance signal is limited to 0.5% or less of the setpoint.

4. The method of any one of the preceding claims, wherein determining the internal EMF includes an approximation according to ${E}_{p} = {U}_{g} + {jX}_{q} {I}_{g} ,$ wherein Eₚ indicates the internal EMF, U_{g} indicates a phasor of the stator voltage, I_{g} indicates a phasor of the stator current, and X_{q} indicates a q-axis synchronous reactance of the synchronous generator.

5. The method of any one of the preceding claims, wherein the electrical angular speed of the rotor is determined from the EMFs using any one of a zero-crossing or a Kalman filter-based technique.

6. The method of any one of the preceding claims, including recording the stator voltage and the stator current over a limited time period, during which the rotor is driven at the substantially constant driving torque and the disturbance signal is added, as time-series data, and using the recorded time-series data for any one or more of the determining of the internal EMFs, the determining of the electrical angular speed, the determining of the active electrical power, and the determining of the inertia constant.

7. The method of any one of the preceding claims, wherein determining the inertia constant includes solving an optimization problem.

8. The method of claim 7, wherein the optimization problem is based on minimizing a difference between the determined electrical angular speed and a simulated angular speed.

9. The method of claim 8, wherein the simulated angular speed is obtained based on a reformulated swing equation of the synchronous machine, the reformulated swing equation obtained by parametrizing on the inertia constant, a damping coefficient, and phase-compensation speed filter time constants.

10. The method of claim 8 or 9, wherein the optimization problem is formulated as $p * = arg {min}_{p ∈ P} {\left‖{ω}_{Ep}-{\hat{ω}}_{Ep}\left(p\right)\right‖}_{2}^{2}$ *subject to:* $H > 0 , D > 0$ $p = \left[{T}_{f 1}, {T}_{f 2}, {T}_{f 3}, {T}_{f 4}, H, D\right]$ $\frac{Δ {f}_{Ep} \left(s\right)}{Δ {P}_{e} \left(s\right)} = \frac{{T}_{f 2} s + 1}{{T}_{f 1} s + 1} ⋅ \frac{{T}_{f 4} s + 1}{{T}_{f 3} s + 1} ⋅ \frac{- 1}{2 Hs + D}$ wherein H indicates the inertia constant, D indicates a damping coefficient, T_{f1}...T_{f4} indicate time constants, and ω_{Ep} and *ω̂_{Ep}* indicate the determined electrical angular speed and the simulated angular speed, respectively.

11. A parameter estimator for a synchronous machine including a stator and a rotor, the parameter estimator configured to estimate, at least, an inertia constant of the synchronous machine, the parameter estimator configured to:
- when the rotor is driven at a substantially constant driving torque, and a disturbance signal causing a variation in an active electrical power (Pₑ) output by the synchronous generator and a variation in an electrical angular speed of the rotor is added, for each phase, obtain a stator voltage and a stator current of the stator of the synchronous machine, for each phase, determining an internal electromotive force, EMF, using the stator voltages and the stator currents, determine the electrical angular speed of the rotor using the EMFs, determine the active electrical power (Pₑ) of the synchronous machine using the stator voltages and the stator currents, and determine the inertia constant from the determined active electrical power (Pₑ) and the determined electrical angular speed.

12. A non-volatile storage medium having a computer program stored thereon, the computer program including instructions that, when executed on a computer processor, cause the processor to perform a method according to any one of claims 1-10.
